# EUROPÄISCHE PATENTSCHRIFT

(11) **EP 3 183 110 B1**
(45) Veröffentlichungstag und Bekanntmachung des Hinweises auf die Patenterteilung: **10.10.2018**
(21) Anmeldenummer: 15756360.2
(22) Anmeldetag: 05.08.2015
(51) Int. Cl.: B29C 67/08, F16J 15/14

(54) **VERFAHREN ZUR HERSTELLUNG EINER DICHTUNG AN EINEM BAUTEIL SOWIE FORMGEBENDES WERKZEUG ZUR VERWENDUNG IN EINEM DERARTIGEN VERFAHREN**
METHOD FOR PRODUCING A SEAL ON A COMPONENT PART AND SHAPING TOOL FOR USE IN SUCH A METHOD
PROCÉDÉ DE PRODUCTION D'UN JOINT SUR UN ÉLÉMENT ET OUTIL DE FAÇONNAGE DESTINÉ À ÊTRE UTILISÉ DANS UN PROCÉDÉ DE CE TYPE

(30) Priorität: 21.08.2014 DE 102014216613
(43) Veröffentlichungstag der Anmeldung: 28.06.2017
(73) Patentinhaber: Henkel AG & Co. KGaA, 40589 Düsseldorf (DE)
(72) Erfinder: BECHER, Jürgen, 80637 München (DE); DREXL, Michael, 85235 Odelzhausen (DE)
(86) Internationale Anmeldenummer: PCT/EP2015/068107
(87) Internationale Veröffentlichungsnummer: WO 2016/026704

(56) Entgegenhaltungen:
- DE-A1- 3 445 715

## Beschreibung

Die vorliegende Erfindung betrifft ein Verfahren zur Herstellung einer Dichtung an einem Bauteil unter Verwendung eines formgebenden Werkzeugs sowie ein formgebendes Werkzeug zur Verwendung in einem derartigen Verfahren.

Zur Vermeidung ungewollter Stoffübergänge von einem Raum in einen anderen werden Dichtungselemente verschiedenster Art eingesetzt. Die Herstellung solcher Dichtungen kann auf unterschiedliche Art und Weise erfolgen.

Für zahlreiche Anwendungsbereiche werden Dichtungen als separate Elemente hergestellt und dann an entsprechender Stelle eingesetzt, wobei hierzu oftmals eine Nut in dem abzudichtenden Bauteil vorgesehen ist, in welche die Dichtung eingelegt bzw. eingedrückt wird.

Die DE3445715A1 offenbart ein Verfahren zu Herstellung einer Dichtung aus einem härtbaren Dichtungsmaterial, auf welche nach Aushärtung des Dichtungsmaterial ein Klebemittel aufgebracht und selbige wir, um die Dichtung schließlich auf ein Bauteil zu kleben.

Aus der EP 1 477 712 A1 ist ein Verfahren zur Erzeugung einer Dichtung an einem Bauteil bekannt, bei welchem ein Dichtungsmaterial zunächst durch Siebdruck auf das abzudichtende Bauteil aufgebracht wird und mithilfe eines Werkzeugs dann die Geometrie der fertigen Dichtung in das Dichtungsmaterial eingeprägt wird.

Im Stand der Technik ist darüber hinaus ein weiteres Verfahren bekannt, welches die Applikation von Dichtungen direkt auf dem abzudichtenden Bauteil ermöglicht, siehe hierzu beispielsweise die US 7,790,094 B2. Das Verfahren sieht vor, dass eine Form mit einem abzudichtenden Bauteil verspannt wird und der Dichtungswerkstoff sodann unter Druck in einem Spritzgussverfahren über einen entsprechenden Zufuhrkanal in eine in der Form ausgebildete Kavität eingespritzt wird. Es ist Überdies bereits bekannt, UV-aushärtende Dichtungswerkstoffe sowie UV-durchlässige formgebende Werkzeuge zu verwenden, so dass die Aushärtung des Dichtungsmaterials durch UV-Bestrahlung durch die Form hindurch erfolgen kann. Derartige Verfahren sind auch unter den Namen "Mold-in-Place" (MIP) bzw. "Cured-in-Place" (CIP) bekannt.

Ein Nachteil des Spritzgussverfahrens besteht darin, dass aufgrund des druckbeaufschlagten Befüllungsvorgangs dafür Sorge zu tragen ist, dass das Bauteil und das Werkzeug ausreichend fest miteinander verspannt und darüber hinaus derart gegeneinander abgedichtet sind, dass das Dichtungsmaterial nicht an unerwünschter Stelle austritt. Die Drücke, bei denen das Dichtungsmaterial eingespritzt werden kann, sind aus diesem Grunde begrenzt. Insbesondere bei der Herstellung sehr klein dimensionierter Dichtungen, wie sie beispielsweise bei Bauteilen für einen Antriebsstrang von Fahrzeugen zum Einsatz kommen, erweist es sich jedoch als schwierig, das Dichtungsmaterial bei begrenztem Druck in die entsprechend kleine Kavität einzuspritzen.

Aufgabe der vorliegenden Erfindung ist daher die Angabe eines Verfahrens zur Herstellung einer Dichtung an einem Bauteil unter Verwendung eines formgebenden Werkzeugs sowie die Bereitstellung eines in einem solchen Verfahren zu verwendenden formgebenden Werkzeugs, wodurch die Nachteile aus dem Stand der Technik überwunden werden können.

Diese Aufgabe wird gelöst durch ein Verfahren gemäß Patentanspruch 1 sowie durch ein formgebendes Werkzeug gemäß Patentanspruch 10.

Vorteilhafte Ausgestaltungen und Weiterbildungen der Erfindung sind Gegenstand der Unteransprüche.

Gemäß Patentanspruch 1 handelt es sich bei der Erfindung um ein Verfahren zur Herstellung einer Dichtung an einem Bauteil unter Verwendung eines formgebenden Werkzeugs, wobei als Material für die Dichtung ein UV-härtender Dichtungswerkstoff verwendet wird und wobei das formgebende Werkzeug eine Oberseite und eine Unterseite sowie mindestens eine zur Unterseite des formgebenden Werkzeugs hin offene Kavität aufweist, welche zur Befüllung mit dem Dichtungswerkstoff vorgesehen ist, und wobei ferner das formgebende Werkzeug zumindest im Bereich der Kavität aus einem UV-durchlässigen Material besteht, umfassend die folgenden Schritte in angegebener Reihenfolge;
1. Einbringen des Dichtungswerkstoffes in die Kavität des formgebenden Werkzeugs mit Hilfe eines Siebdruckverfahrens,
2. Aufsetzen des Bauteils auf die Unterseite des mit dem Dichtungswerkstoff versehenen Werkzeugs,
3. Aufdrücken des Bauteils auf das Werkzeug,
4. Aushärten des Dichtungswerkstoffes durch UV-Bestrahlung,
5. Abnehmen des Werkzeugs von dem Bauteil und der mit diesem verbundenen Dichtung.

Mit anderen Worten zeichnet sich das erfindungsgemäße Verfahren in erster Linie dadurch aus, dass der Dichtungswerkstoff in einem ersten Verfahrensschritt in die zur Unterseite des formgebenden Werkzeugs hin offene Kavität des Werkzeugs eingebracht wird und erst in einem darauf folgenden Verfahrensschritt das abzudichtende Bauteil auf die Unterseite des mit Dichtungswerkstoff befüllten Werkzeugs aufgesetzt wird. Ein Befüllen des formgebenden Werkzeugs, im Weiteren auch als Form bezeichnet, unter Druck entfällt somit, so dass die oben genannten, mit einer druckbeaufschlagten Befüllung der Form einhergehenden Nachteile überwunden werden können.

Die Bezeichnungen Unterseite und Oberseite sind dabei grundsätzlich austauschbar, das heißt diejenige Seite des formgebenden Werkzeugs, zu welcher hin die Kavität offen ist, kann ebenso als Oberseite und die von der Kavität abgewandte Seite als Unterseite des formgebenden Werkzeugs bezeichnet werden.

Unter einem abzudichtenden Bauteil kann dabei jedes sich eignende Bauteil verstanden werden. Insbesondere kann besagtes Bauteil folienartig oder als Folie ausgestaltet sein, wie es beispielsweise in der Brennstoffzellenfertigung der Fall ist.

Das in den Verfahrensschritten 2 und 3 beschriebene Aufsetzen und Aufdrücken des Bauteils auf das Werkzeug ist als Relativbewegung zwischen Bauteil und Werkzeug zu verstehen. Die Erfindung umfasst somit ausdrücklich auch Verfahren, bei welchen das Werkzeug auf das Bauteil aufgesetzt und aufgedrückt wird. Entscheidend ist, dass das Bauteil und das mit dem Dichtungswerkstoff in einem vorangehenden Verfahrensschritt befüllte formgebende Werkzeug aneinander herangeführt und zusammengedrückt werden.

Mit dem erfindungsgemäßen Verfahren lassen sich grundsätzlich Dichtungen beliebiger Höhe realisieren, insbesondere ist das Verfahren jedoch geeignet zur Herstellung sehr klein dimensionierter Dichtungen mit einer Höhe zwischen 0,2 und 1 mm, wie sie beispielsweise im Brennstoffzellenbau Verwendung finden. Jedoch können derartige Dichtungen selbstverständlich auch in anderen Bereichen eingesetzt werden, insbesondere im Motorbau.

Erfindungsgemäß ist es vorgesehen, dass das Einbringen des Dichtungswerkstoffes in die Kavität des formgebenden Werkzeugs mit Hilfe eines Siebdruckverfahrens erfolgt. Hierzu wird die Form in einer Siebdruckmaschine positioniert und der Dichtungswerkstoff wird mit Hilfe eines Rakels durch ein feinmaschiges Sieb hindurch in die Kavität der Form eingebracht. Das Sieb ist dabei mit Hilfe von Schablonen derart präparierbar, dass ein Auftrag des Dichtungswerkstoffes lediglich in einem dafür vorgesehenen Bereich, hier im Bereich der Kavität, erfolgt und das Sieb außerhalb dieses Bereichs für den Dichtungswerkstoff undurchlässig ausgebildet ist. In Abhängigkeit von der Tiefe der Kavität und damit der Höhe der auszubildenden Dichtung kann ein mehrmaliges Einrakeln von Dichtungswerkstoff notwendig sein, um die Kavität vollständig zu füllen.

Auf diese Weise ist, anders als beim im Stand der Technik üblichen Spritzgussverfahren, ein völlig druckfreies Befüllen der Form möglich.

Insbesondere zur Erzeugung größerer Dichtungshöhen kann erfindungsgemäß ein Robotersystem zum Einsatz kommen, durch welches der Dichtungswerkstoff automatisiert unmittelbar in die Kavität des formgebenden Werkzeugs eingebracht wird.

Erfindungsgemäß ist vorgesehen, dass das formgebende Werkzeug zumindest im Bereich der Kavität aus einem flexiblen Material, vorzugsweise aus Silikon oder auf Basis von Silikon, besteht. Auf diese Weise lässt sich die Form nach erfolgter Aushärtung leicht von dem abzudichtenden Bauteil und der mit diesem verbundenen Dichtung abnehmen. Das flexible Material weist zu diesem Zweck vorzugsweise eine gute Trennwirkung zu dem zu verarbeitenden Dichtungswerkstoff und ein gutes Abformverhalten auf. Da die Aushärtung des Dichtungswerkstoffs erfindungsgemäß mittels UV-Bestrahlung erfolgt, ist das flexible Material darüber hinaus zumindest im Bereich der Kavität UV-durchlässig und UV-stabil. Dabei kann das formgebende Werkzeug im Bereich der Kavität von der Unterseite bis zur Oberseite hin durchgehend aus einem UV-durchlässigen Material bestehen.

Ein weiterer Vorteil des flexiblen Materials, beispielsweise von Silikon, besteht darin, dass Toleranzen zwischen der Form und dem abzudichtenden Bauteil ausgeglichen werden können. Die Form aus flexiblem Material passt sich dabei der Oberfläche des abzudichtenden Bauteils in idealer Weise an. Dies ist bei dem erfindungsgemäßen Verfahren insbesondere auch deshalb von Bedeutung, da anders als beim Spritzgussverfahren auf ein Verspannen des Bauteils mit der Form und den damit einhergehenden Anpressdruck verzichtet wird.

Zur Stabilisierung besteht die Form erfindungsgemäß aus einem unflexiblen Material, beispielsweise aus Stahl, Aluminium oder Kunststoff bestehen. Hierdurch ist das formgebende Werkzeug einfacher zu handhaben und weniger anfällig für Beschädigungen. In jedem Falle besteht das formgebende Werkzeug jedoch zumindest im Bereich der Kavität aus einem UV-durchlässigen Material. Geeignete Materialkombinationen für das formgebende Werkzeug sind somit beispielsweise Aluminium und Silikon oder Stahl und Silikon.

Als Dichtungswerkstoff sieht das erfindungsgemäße Verfahren einen Werkstoff vor, welcher über einen UV-initiierten Aushärtemechanismus verfügt, Ein derartiger Werkstoff kann gemäß einem Vorschlag der Erfindung auf Polyacrylat oder Polyisobutylen basieren. Darüber hinaus ist der Dichtungswerkstoff vorzugsweise so beschaffen, dass bei Einsatz des Siebdruckverfahrens während des Dichtmaterialauftrags keine Blasenbildung in dem Produkt erfolgt. Dies kann gegebenenfalls durch Zugabe entsprechender Entschäumer erreicht werden.

Das Aushärten des UV-härtenden Dichtungswerkstoffes kann gemäß einem Erfindungsgedanken in einer UV-Kammer erfolgen, in die die Form mit aufgesetztem Bauteil eingebracht wird. Alternativ kann der Verbund aus Form und Bauteil an UV-LED-Felder herangeführt werden, durch welche die Aushärtung erfolgt. Der Wellenlängenbereich der emittierten UV-Strahlung liegt vorzugsweise in einem Bereich zwischen 200 und 550 nm. Dabei kann Strahlung mit einem Spektrum unterschiedlicher Wellenlängen oder aber mit einzelnen diskreten Wellenlängen, beispielsweise 375 nm oder 405 nm, eingesetzt werden.
Eine alternative Ausgestaltung der Erfindung sieht vor, dass das Aushärten des Dichtungswerkstoffes mit Hilfe von UV-LED's erfolgt, welche unmittelbar auf das formgebende Werkzeug aufgebracht sind. Hierdurch entfällt der manuelle Arbeitsschritt des Einbringens von Werkzeug und Bauteil in eine UV-Kammer oder in ein externes UV-LED-Feld und die UV-Strahlung kann zudem sehr genau im Bereich der Kavität appliziert werden. Über die Wellenlängenbereiche der emittierten UV-Strahlung gilt hier das gleiche wie oben im Zusammenhang mit UV-Kammern beschrieben.

Gemäß Patentanspruch 7 sieht die Erfindung auch ein formgebendes Werkzeug zur Verwendung in einem Verfahren zur Herstellung einer Dichtung an einem Bauteil gemäß einem der Ansprüche 1 bis 6 vor, wobei das Werkzeug eine Oberseite und eine Unterseite sowie mindestens eine an der Unterseite angeordnete Kavität umfasst, welche eine zur Unterseite gerichtete Öffnung aufweist, durch die sich die Kavität mit einem Dichtungswerkstoff befüllen lässt, und wobei ferner das formgebende Werkzeug zumindest im Bereich der Kavität aus einem UV-durchlässigen Material besteht, und wobei das Werkzeug über die Öffnung der Kavität hinausgehend keinerlei zu einem Rand des formgebenden Werkzeugs hin offenen Zufuhrkanal für die Zuführung von Dichtungswerkstoff aufweist.
Für die Bezeichnungen Oberseite und Unterseite gilt das oben bereits im Zusammenhang mit dem erfindungsgemäßen Verfahren Gesagte entsprechend.
Anders als formgebende Werkzeuge, die in einem Spritzgussverfahren verwendet werden, weist das beanspruchte Werkzeug somit keinerlei zu einem Rand des Werkzeugs hin offenen Zufuhrkanal für die Einspritzung von Dichtungswerkstoff auf. Unter dem Rand des Werkzeugs sind erfindungsgemäß sämtliche äußeren Begrenzungen des Werkzeugs mit Ausnahme der Unterseite, in welcher die Kavität angeordnet ist, zu verstehen. Die erfindungsgemäße Form wird vielmehr zunächst mit einem Dichtungswerkstoff befüllt, und zwar durch Einbringen des Dichtungswerkstoffes in die zur Unterseite des Werkzeugs hin gerichtete Öffnung der Kavität, bevor das abzudichtende Bauteil auf die solchermaßen gefüllte Form aufgesetzt wird.

Zumindest im Bereich der Kavität besteht das Werkzeug aus einem flexiblen Material, beispielweise aus Silikon. Darüber hinaus besteht das formgebende Werkzeug bereichsweise aus einem unflexiblen Material wie Stahl, Aluminium oder Kunststoff bestehen, um eine einfachere Handhabung und Stabilisierung zu ermöglichen.
Gemäß einer Ausgestaltung des erfindungsgemäßen Werkzeugs sind UV-LED's unmittelbar auf das formgebende Werkzeug aufgebracht, so dass die Aushärtung des Dichtungswerkstoffes ohne eine weitere Verlagerung von Bauteil und Werkzeug und zudem sehr gut lokalisierbar durchgeführt werden kann.
Im Folgenden wird die Erfindung anhand von Ausführungsbeispielen und unter Bezugnahme auf die beigefügten Zeichnungen näher erläutert. Es zeigen:
- Figur 1:: eine Ausgestaltung des erfindungsgemäßen formgebenden Werkzeugs in schematischer Schnittdarstellung;
- Figur 2:: eine alternative Ausgestaltung des erfindungsgemäßen formgebenden Werkzeugs in schematischer Schnittdarstellung;
- Figur 3:: Abfolge der Verfahrensschritte des erfindungsgemäßen Verfahrens in schematischer Darstellung.

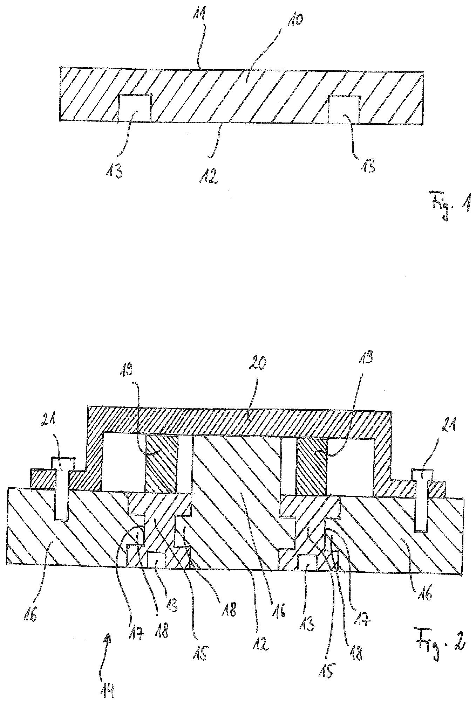

Figur 1 zeigt in Schnittdarstellung ein mit 10 bezeichnetes formgebendes Werkzeug, welches vollständig aus Silikon gefertigt ist. Das Werkzeug 10 weist eine Oberseite 11 und eine Unterseite 12 sowie eine kreisförmige Kavität 13 auf, welche zur Unterseite 12 des Werkzeugs 10 hin offen ist. In Figur 2 ist eine alternative Ausgestaltung eines hier im Ganzen mit 14 bezeichneten formgebenden Werkzeugs dargestellt. Das Werkzeug 14 weist einen aus Silikon bestehenden Ring 15 auf, in welchem analog zu dem in Figur 1 gezeigten Ausführungsbeispiel eine Kavität 13 ausgebildet ist. Der Silikonring 15 ist UV-durchlässig. Die Kavität 13 ist zur Unterseite 12 des Werkzeugs 14 hin offen. Der Silikonring 15 ist eingebettet in eine Stabilisierungshilfe 16 aus Stahl, wobei der Silikonring 15 seitliche Ausnehmungen 17 aufweist, in welche die Stabilisierungshilfe 16 mit Vorsprüngen 18 nach dem Prinzip einer Nut-Feder-Verbindung eingreift, wodurch eine Relativbewegung von Silikonring 15 und Stabilisierungshilfe 16 verhindert wird.
Oberhalb des Silikonrings 15 ist ein Ring aus UV-LED's 19 angeordnet, welche UV-Strahlung in einem Wellenlängenbereich zwischen 200 und 550 nm emittieren. Zur Fixierung der UV-LED'S sowie der einzelnen Komponenten des Werkzeugs 14 ist eine Klammer 20 über die UV-LED's sowie den zentralen Kern der Stabilisierungshilfe 16 geführt, welche in einem Randbereich des Werkzeugs 14 mit Hilfe von Schrauben 21 an der Stabilisierungshilfe 16 fixiert ist.

Das in Figur 2 lediglich in Schnittdarstellung gezeigte Werkzeug 14 hat eine annähernd quadratische äußere Form. Der in die Stabilisierungshilfe eingebettete Silikonring 15 ist ebenfalls in Form eines an den Ecken abgerundeten Quadrats geführt und entsprechend folgt auch die Kavität 13 dieser Form. Selbstverständlich können sowohl das Werkzeug 14 als auch der Silikonring 15 und die darin ausgebildete Kavität 13 auch jede andere Form aufweisen, beispielsweise die eines Kreises oder einer Ellipse.

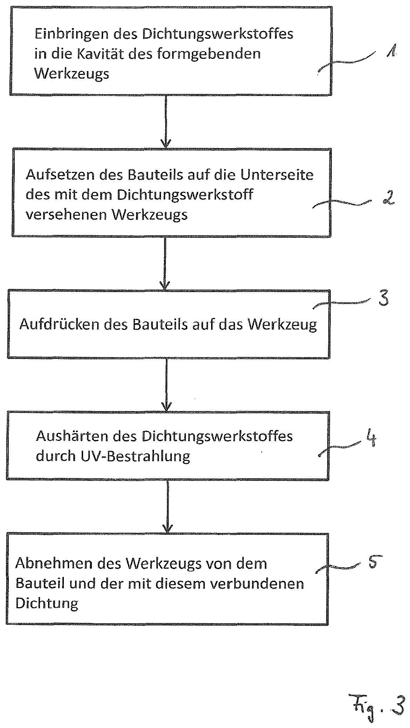

In Figur 3 ist die Abfolge der einzelnen Verfahrensschritte zur Durchführung eines Verfahrens zum Herstellen einer Dichtung an einem Bauteil unter Verwendung eines formgebenden Werkzeugs gemäß der Figuren 1 und 2 schematisch dargestellt. Ein konkreter Verfahrensablauf unter Verwendung des Werkzeugs 14 aus Figur 2 kann folgendermaßen aussehen: In einem Schritt 1 wird mit Hilfe eines Siebdruckverfahrens zunächst ein Dichtungswerkstoff auf Basis von Polyacrylat in die Kavität 13 des formgebenden Werkzeugs 14 eingebracht. Hierzu wird das Werkzeug 14 gegenüber der Darstellung der Figur 2 um 180° gewendet, so dass die Unterseite 12 des Werkzeugs 14 mit der offenen Kavität 13 nach oben zeigt. Der Dichtungswerkstoff wird durch ein geeignet präpariertes Sieb aufgebracht und mit Hilfe eines Rakels durch das Sieb hindurchgedrückt und in die Kavität 13 eingebracht. Dieser Verfahrensschritt wird solange wiederholt, bis die Kavität 13 vollständig mit dem Dichtungswerkstoff ausgefüllt ist.

Gemäß Verfahrensschritt 2 wird daraufhin das in den Figuren nicht dargestellte abzudichtende Bauteil auf die Unterseite 12 des mit dem Dichtungswerkstoff versehenen Werkzeugs 14 aufgesetzt und entsprechend Verfahrensschritt 3 auf das Werkzeug 14 aufgedrückt.

In dem sich anschließenden Verfahrensschritt 4 werden die an dem Werkzeug 14 vorgesehenen UV-LED's 19 eingeschaltet und der Dichtungswerkstoff wird durch UV-Bestrahlung ausgehärtet. Aufgrund der UV-Durchfässigkeit des Silikonrings 15 gelangt die UV-Strahlung ohne weiteres in den Bereich der Kavität 13 und initiiert hier den Aushärtemechanismus in dem Dichtungswerkstoff. Die Dauer der Bestrahlung richtet sich nach der Menge der auszuhärtenden Dichtmasse. Für Dichtungshöhen im Bereich von 0,2 bis 1 mm erfolgt die Aushärtung innerhalb weniger Sekunden.

Nach erfolgter Aushärtung wird das Werkzeug 14 in einem letzten Verfahrensschritt 5 von dem abzudichtenden Bauteil und der mit diesem verbundenen Dichtung abgenommen. Aufgrund der guten Trennwirkung des Silikons gegenüber dem auf Polyacrylat basierenden Dichtungswerkstoff ist dies ohne Weiteres möglich.

Grundsätzlich sind mit dem erfindungsgemäßen Verfahren höhere Prozessgeschwindigkeiten möglich als beim konventionellen Spritzgussverfahren, da der Füllvorgang und der Aushärtevorgang voneinander getrennt werden können. Zudem können durch Verzicht auf die Einspritzeinheit die Werkzeug- und Prozesskosten gesenkt werden. Schließlich können Ungenauigkeiten in der Geometrie der herzustellenden Dichtung vermieden werden, die beim Spritzgussverfahren aufgrund des erforderlichen Einspritzdruckes und der nicht immer optimalen Abdichtung zwischen Werkzeug und Bauteil zwangsläufig auftreten.

## Patentansprüche

1. Verfahren zur Herstellung einer Dichtung an einem Bauteil unter Verwendung eines formgebenden Werkzeugs (10, 14), wobei als Material für die Dichtung ein UV-härtender Dichtungswerkstoff verwendet wird und wobei das formgebende Werkzeug (10, 14) eine Oberseite (11) und eine Unterseite (12) sowie mindestens eine zur Unterseite (12) des formgebenden Werkzeugs (10, 14) hin offene Kavität (13) aufweist, welche zur Befüllung mit dem Dichtungswerkstoff vorgesehen ist, und wobei ferner das formgebende Werkzeug (10, 14) zumindest im Bereich der Kavität (13) aus einem UV-durchlässigen Material besteht und wobei das formgebende Werkzeug (10, 14) bereichsweise aus einem unflexiblen Material besteht, wobei das formgebende Werkzeug (10, 14) zumindest im Bereich der Kavität (13) aus einem flexiblen Material besteht, umfassend die folgenden Schritte in angegebener Reihenfolge:
1. Einbringen des Dichtungswerkstoffes in die Kavität (13) des formgebenden Werkzeugs (10,14) mit Hilfe eines Siebdruckverfahrens,
2. Aufsetzen des Bauteils auf die Unterseite (12) des mit dem Dichtungswerkstoff versehenen Werkzeugs (10, 14),
3. Aufdrücken des Bauteils auf das Werkzeug (10, 14),
4. Aushärten des Dichtungswerkstoffes durch UV-Bestrahlung,
5. Abnehmen des Werkzeugs (10, 14) von dem Bauteil und der mit diesem verbundenen Dichtung.

2. Verfahren nach Anspruch 1, **dadurch gekennzeichnet, dass** das Einbringen des Dichtungswerkstoffes in die Kavität (13) des formgebenden Werkzeugs (10, 14) automatisiert mittels eines Robotersystems erfolgt.

3. Verfahren nach Anspruch 1, **dadurch gekennzeichnet, dass** das flexible Material Silikon ist,

4. Verfahren nach einem der Ansprüche 1 bis 3, **dadurch gekennzeichnet, dass** der Dichtungswerkstoff ein UV-härtender Werkstoff auf Basis von Polyacrylat oder Polyisobutylen ist.

5. Verfahren nach einem der Ansprüche 1 bis 4, **dadurch gekennzeichnet, dass** das Aushärten des Dichtungswerkstoffes in einer UV-Kammer oder mittels UV-LED-Feldern erfolgt.

6. Verfahren nach einem der Ansprüche 1 bis 5, **dadurch gekennzeichnet, dass** das Aushärten des Dichtungswerkstoffes mit Hilfe von UV-LED's (19) erfolgt, welche unmittelbar auf das formgebende Werkzeug (10, 14) aufgebracht sind.

7. Formgebendes Werkzeug (10, 14) zur Verwendung in einem Verfahren zur Herstellung einer Dichtung an einem Bauteil gemäß einem der Ansprüche 1 bis 6, wobei das Werkzeug (10, 14) eine Oberseite (11) und eine Unterseite (12) sowie mindestens eine an der Unterseite (12) angeordnete Kavität (13) umfasst, welche eine zur Unterseite (12) gerichtete Öffnung aufweist, durch die sich die Kavität (13) mit Hilfe eines Siebdruckverfahrens mit einem Dichtungswerkstoff befüllen lässt, und wobei ferner das formgebende Werkzeug (10, 14) zumindest im Bereich der Kavität (13) aus einem UV-durchlassigen Material besteht, **wobei** das formgebende Werkzeug (10, 14) über die Öffnung der Kavität (13) hinausgehend keinerlei zu einem Rand des formgebenden Werkzeugs (10, 14) hin offenen Zufuhrkanal für die Zuführung von Dichtungswerkstoff aufweist, **dadurch gekennzeichnet, dass** das formgebende Werkzeug (10, 14) bereichsweise aus einem unflexiblen Material besteht und dass das Werkzeug (10, 14) zumindest im Bereich der Kavität (13) aus einem flexiblen Material besteht.

8. Formgebendes Werkzeug (10, 14) nach Anspruch 7, **dadurch gekennzeichnet, dass** UV-LED's (19) unmittelbar auf das formgebende Werkzeug (10, 14) aufgebracht sind.

## Claims

1. A method for producing a seal on a component using a shaping tool (10, 14), wherein a UV-curing sealing material is used as the material for the seal and wherein the shaping tool (10, 14) has an upper face (11) and a lower face (12) and at least one cavity (13) which is open towards the lower face (12) of the shaping tool (10, 14) and which is provided to be filled with the sealing material, and wherein, in addition, the shaping tool (10, 14) consists of a UV-permeable material at least in the region of the cavity (13) and wherein the shaping tool (10, 14) consists of an inflexible material in regions, wherein the shaping tool (10, 14) consists of a flexible material at least in the region of the cavity (13), said method comprising the following steps in the stated sequence:
1. introducing the sealing material into the cavity (13) of the shaping tool (10, 14) by means of screen printing,
2. placing the component on the lower face (12) of the tool (10, 14) provided with the sealing material,
3. pressing the component onto the tool (10, 14),
4. curing the sealing material using UV radiation,
5. removing the tool (10, 14) from the component and the seal connected thereto.

2. The method according to claim 1, **characterized in that** the sealing material is introduced into the cavity (13) of the shaping tool (10, 14) in an automated manner by means of a robotic system.

3. The method according to claim 1, **characterized in that** the flexible material is silicone.

4. The method according to one of claims 1 to 3, **characterized in that** the sealing material is a polyacrylate-based or polyisobutylene-based UV-curing material.

5. The method according to one of claims 1 to 4, **characterized in that** the sealing material is cured in a UV chamber or by means of UV LED fields.

6. The method according to one of claims 1 to 5, **characterized in that** the sealing material is cured by means of UV LEDs (19) which are applied directly to the shaping tool (10, 14).

7. A shaping tool (10, 14) for use in a method for producing a seal on a component according to one of claims 1 to 6, the tool (10, 14) comprising an upper face (11) and a lower face (12), and at least one cavity (13) which is arranged in the lower face (12) and has an opening directed towards the lower face (12), through which opening the cavity (13) can be filled with a sealing material by means of screen printing, and the shaping tool (10, 14) in addition consisting of a UV-permeable material at least in the region of the cavity (13), the shaping tool (10, 14) not having, apart from the opening of the cavity (13), any supply channel for supplying sealing material which is open towards an edge of the shaping tool (10, 14), **characterized in that** the shaping tool (10, 14) consists of an inflexible material in regions and **in that** the shaping tool (10, 14) consists of a flexible material at least in the region of the cavity (13).

8. The shaping tool (10, 14) according to claim 7, **characterized in that** UV LEDs (19) are applied directly to the shaping tool (10, 14).

## Revendications

1. Procédé de fabrication d'un joint sur un composant à l'aide d'un outil de formage (10, 14), dans lequel un matériau d'étanchéité durcissant aux UV est utilisé comme matériau pour le joint et dans lequel l'outil de formage (10, 14) comporte un côté supérieur (11) et un côté inférieur (12) et au moins une cavité ouverte (13) vers le côté inférieur (12) de l'outil de formage (10, 14), laquelle cavité est destinée à être remplie du matériau d'étanchéité, et l'outil de formage (10, 14) étant, en outre, constitué au moins dans la zone de la cavité (13) d'un matériau perméable aux UV, l'outil de formage (10, 14) étant constitué en partie d'un matériau rigide, et l'outil de formage (10, 14) étant constitué au moins dans la zone de la cavité (13) d'un matériau flexible, lequel procédé comprend les étapes suivantes dans l'ordre indiqué :
1. introduire le matériau d'étanchéité dans la cavité (13) de l'outil de formage (10, 14) au moyen d'un procédé de sérigraphie,
2. placer le composant sur le côté inférieur (12) de l'outil (10, 14) muni du matériau d'étanchéité,
3. presser le composant contre l'outil (10, 14),
4. durcir le matériau d'étanchéité par rayons UV,
5. retirer l'outil (10, 14) du composant et le joint associé à celui-ci.

2. Procédé selon la revendication 1, **caractérisé en ce que** l'introduction du matériau d'étanchéité dans la cavité (13) de l'outil de formage (10, 14) s'effectue automatiquement au moyen d'un système de robot.

3. Procédé selon la revendication 1, **caractérisé en ce que** le matériau flexible est du silicone.

4. Procédé selon l'une des revendications 1 à 3, **caractérisé en ce que** le matériau d'étanchéité est un matériau durcissant aux UV à base de polyacrylate ou de polyisobutylène.

5. Procédé selon l'une des revendications 1 à 4, **caractérisé en ce que** le durcissement du matériau d'étanchéité a lieu dans une chambre UV ou au moyen de champs de LED à UV.

6. Procédé selon l'une des revendications 1 à 5, **caractérisé en ce que** le durcissement du matériau d'étanchéité s'effectue à l'aide de LED à UV (19), qui sont posées directement sur l'outil de formage (10, 14).

7. Outil de formage (10, 14) destiné à être utilisé dans un procédé de fabrication d'un joint sur un composant selon l'une des revendications 1 à 6, l'outil (10, 14) comportant un côté supérieur (11) et un côté inférieur (12) et au moins une cavité (13) disposée sur le côté inférieur (12) et dotée d'une ouverture dirigée vers le côté inférieur (12), par laquelle la cavité (13) peut être remplie d'un matériau d'étanchéité au moyen d'un procédé de sérigraphie, et l'outil de formage (10, 14) étant en outre constitué au moins dans la zone de la cavité (13) d'un matériau perméable aux UV, l'outil de formage (10, 14) ne disposant aucunement, dépassant de l'ouverture de la cavité (13), d'un canal d'alimentation pour la fourniture de matériau d'étanchéité, ouvert vers un bord de l'outil de formage (10, 14), **caractérisé en ce que** l'outil de formage (10, 14) est constitué en partie d'un matériau rigide et **en ce que** l'outil (10,14) est constitué au moins dans la zone de la cavité (13) d'un matériau flexible.

8. Outil de formage (10, 14) selon la revendication 7, **caractérisé en ce que** des LED à UV (19) sont placées directement sur l'outil de formage (10, 14).
